# EUROPÄISCHE PATENTSCHRIFT

(11) **EP 1 129 869 B1**
(45) Veröffentlichungstag und Bekanntmachung des Hinweises auf die Patenterteilung: **20.04.2005**
(21) Anmeldenummer: 01103158.0
(22) Anmeldetag: 10.02.2001
(51) Int. Cl.: B60C 11/16, B60C 11/00

(54) **Fahrzeugreifen mit einer Lauffläche und Spikes darin**
Vehicle tyre with a tread comprising spikes
Bandage pneumatique pour véhicule muni d'une bande de roulement à crampons

(30) Priorität: 18.02.2000 DE 10007464
(43) Veröffentlichungstag der Anmeldung: 05.09.2001
(73) Patentinhaber: Continental Aktiengesellschaft, 30165 Hannover (DE)
(72) Erfinder: Köbe, Andreas, Dr., 64625 Bensheim (DE); Ostrovskis, Allan, 33235 Gislaved (SE); Claesson, Lennart, 33235 Gislaved (SE)

(56) Entgegenhaltungen:
- DE-A- 2 450 629
- DE-A- 2 557 480
- DE-C- 19 837 461
- FR-A- 1 353 441
- PATENT ABSTRACTS OF JAPAN vol. 005, no. 093 (M-074), 17. Juni 1981 (1981-06-17) & JP 56 039903 A (HIGASHI SAPPORO NITSUTSUU YUSO KK), 15. April 1981 (1981-04-15)

## Beschreibung

Die Erfindung bezieht sich auf einen Fahrzeugreifen mit Spikes nach dem Oberbegriff des Patentanspruchs 1.

Derartige Fahrzeugreifen werden insbesondere in Gegenden mit einer Neigung zur starken Glatteisbildung verwendet, um einen besseren Griff des Reifens auch auf Glatteis zu gewährleisten. . Als Reifen werden insbesondere Winterreifen verwendet, deren erhabene Bereiche vorteilhafterweise Klötze oder Blöcke sind. Der Fahrzeugreifen kann dabei ein einziges Profilmuster oder gegebenenfalls auch weitere Profilmuster aufweisen. Er kann insbesondere Umfangsabschnitte mit unterschiedlicher Streckung oder Stauchung des Profilmusters in Umfangsrichtung, d. h. sogenannte Pitchfolgen, aufweisen. Bei derartig gepitchten Fahrzeugreifen ergeben sich somit in Umfangsrichtung zumindest streckenweise ungleichmäßige Anordnungen der erhabenen Bereiche, die auch als "Positive" bezeichnet werden.

Die Spikes werden in die erhabenen Bereiche der Lauffläche des Reifens in voneinander axial beabstandeten Spikereihen im allgemeinen maschinell, z. B. mittels eines Bespikungsroboters, eingedrückt.

Die Anordnung der Spikepositionen kann in der Pitchfolge des Reifens z.B. derartig vorgesehen sein, dass die Spikeposition, die den Spikemittelpunkt des später einzusetzenden Spikes darstellt, wie die Querrillen und Klötze des Profils als Profildétail aufgefasst werden und dementsprechend ihr Umfangsabstand zur benachbarten voreilenden Pitchgrenze (X-Richtung) und ihr Umfangsabstand zur benachbarten nacheilenden Pitchgrenze entsprechend der jeweiligen Pitch-Länge mitgestreckt bzw. mit gestaucht wird. Somit bleibt die relative Anordnung der Spikepositionen in den jeweiligen erhabenen Bereichen bzw. Profilpositiven jeweils gleich.

Um die Spikes fest und ohne Gefahr des Ausbrechens in den Profilpositiven zu verankern, sollten sie einen Mindestabstand zu den jeweiligen Kanten der Profilpositive aufweisen.

Die **DT 24 50 629 A1** zeigt einen Spikeluftreifen, bei dem in einem axial mittleren Bereich der Lauffläche keine Spikes vorgesehen sind und in axial äußeren Bereichen die Spikes jeweils in wenigstens einer Reihe in einem bei 40 % bis maximal 50 % des Abstandes zwischen der Umfangsmitte der Lauffläche und der Schulter liegenden Bereich, in wenigstens einer Reihe in einem bei 50 bis max. 60 % des Abstandes liegenden Bereich, und in wenistens einer Reihe in einem bei 60 bis 80 % des genannten Abstandes liegenden Bereich eingesetzt sind. Hierbei wird eine Spikeverteilung in den verschiedenen Reihen über den Umfang des Reifens periodisch wiederholt.

Nachteilhaft an den bekannten Spikeverteilungen ist jedoch, dass durch die Spikes als störend empfundene Fahrgeräusche verursacht werden. Neben der Schallintensität ist insbesondere die Pegelverteilung über der Frequenz für das Hörempfinden ausschlaggebend; um dieses Hörempfinden ausdrücken und danach zu objektivieren und letztlich verbessern zu können, haben die Technik-Akustiker folgende Begriffswelt gebildet:

Wenn ein sehr hoher Anteil der gesamten Schallleistung in solchen Frequenzen anfällt, die zu einer im hörbaren Bereich gelegenen Grundfrequenz in einem ganzzahligen Verhältnis stehen, so wird dieser Schall als "Ton" empfunden; ein etwas weniger hoher Anteil wird als "tonales Geräusch" empfunden. Eine noch gleichmäßigere Verteilung der Schallleistung über dem hörbaren Frequenzspektrum wird hingegen als "Rauschen" empfunden, und zwar zunächst als tonhaltiges oder - in Anlehnung an das Farbempfinden - "farbiges Rauschen" und bei einer nahezu vollständig gleichmäßigen Schallleistungsverteilung über dem Frequenzspektrum ist von tonlosem oder "weißem Rauschen" die Rede.

Bei gleichem Schallleistungspegel erreicht ein Schall in unserem Gehirn eine umso höhere Aufmerksamkeit und Beachtung, desto tonaler es ist. Dahinter steckt unsere alltägliche Hörerfahrung, dass absichtliche Schallquellen wie menschliche Stimmen, tierische Stimmen, Musikinstrumente, aber auch warneinrichtungen wie Trillerpfeife, Martinshorn oder Wecker in höherer Tonalität senden als unbeabsichtigte Geräusche, wie Blätterraschen, Meeresbrandung oder auch Beifall, den wir kaum von Regen unterscheiden können, wenn dieser auf hinreichend weiche Flächen prasselt.

Desto tonaler ein Geräusch ist, desto geringer ist der Schallleistungspegel, ab dem dieses Geräusch bei einer Dauerexposition als unangenehm oder gar nervend bewertet wird. Die Psychoakustiker erklären sich diese Tatsache mit der Enttäuschung über eine andauernde Irreführung: Das ausweislich seines Frquenzspektrums Aufmerksamkeit fordernde Geräusch wird als besonders unangenehm empfunden, sobald es als zu einer belanglosen Schallquelle gehörend entlarvt ist und/oder zweitens nicht abstellbar ist, wie etwa ein pfeifender Kessel, ein Wecker oder auch Babygeschrei.

Ferner ist bekannt, dass negative Subjektivbeurteilungen besonders leicht zustande kommen, wenn vor allem der Frequenzausschnitt, der für die Spracherkennung besonders wichtig ist (800 bis 2.400 Hz), vom zu beurteilenden Schall besetzt wird.

Aus der nachveröffentlichten DE 198 37 461, welche somit unter Art. 54(3) fällt, ist ein Fahrzeugreifen nach der Art des Oberbegriffs des Patentanspruchs 1 mit einer Pitchfolge für die Gummipositive bekannt. Bei diesem Reifen sind die Spikes entsprechend der gleichen Pitchfolge über den Umfang verteilt, und zwar in der Weise, dass der Abstand eines jeden Spikes zur voreilenden - alternativ auch zur nacheilenden - Pitchgrenze jeweils gleich ist. So soll die abgestahlte Schalleistung gleichmäßiger auf ein breites Frequenzspektrum verteilt und damit das Laufgeräusch des Reifens angenehmer werden. Hiermit wird eine ansonsten durch Mitstreckung und Mitstauchung sich ergebende Verflachung der Schrittlängenvariation vermieden. Diese Schrift sucht also eine größere Schrittlängenvariation als der damalige Stand der Technik.

Ein gattungsgemäßer Fahrzeugreifen mit allen Merkmalen des Oberbegriffs des Patentanspruchs 1 ist aus der DE 25 57 480 A 1 bekannt.

Die Erfindung behandelt die Aufgabe, an einem Fahrzeugreifen gemäß dem Oberbegriff des Anspruchs 1 sowohl die Griffigkeit auf Glatteis als auch die Angenehmheit der Geräuschbildung weiter zu verbessern.

Diese Aufgabe wird ausgehend von den Merkmalen des Oberbegriffes des Anspruches 1 durch die kennzeichnenden Merkmale des Anspruches 1 gelöst, also insbesondere dadurch, dass die Spikesanzahl Aₘₐₓ in dem Laufflächen-Ausschnitt mit der größten Spikedichte um höchstenes 2 größer ist als die Spikesanzahl Aₘᵢₙ in dem Laufflächen-Ausschnitt mit der geringsten Spikedichte, und dass innerhalb eines jeden solchen Laufflächen-Ausschnittes (F1, F2) in jeder Spikereihe (Rᵢ) maximal ein Spike (S) positioniert ist. Dabei ist mit "Laufflächenausschnitt" jeder solche Laufflächenausschnitt gemeint, dessen Umriss dem Umriss des Latsches (= der Reifenaufstandsfläche = dem footprint) entspricht.

Nach dieser Lehre können Spikepositionen auf der Lauffläche mit der weiteren Limitierung ausgewählt werden, dass in allen Laufflächenausschnitten jeweils mindestens eine vorgegebene Mindestanzahl von Spikes vorgesehen ist. Die vorgenenannte Mindestanzahl kann bei PKW-Reifen zwischen 5 und 8 liegen, vorzugsweise wird sie zu 6 gesetzt.

Für die Verwirklichung der erfindungsgemäßen Lehre werden zunächst alle im Hinblick auf die Verankerbarkeit von Spikes und deren Einordnung in Spikespuren möglichen Spikepositionen auf einer Abwicklung der Lauffläche markiert. Danach werden die Spikepositionen unter Beachtung der vorgenannten Limitierungen ungleichmäßig über die Lauffläche verteilt und schließlich während der Reifenherstellung mit Spikes besetzt.

Erfindungsgemäß wird somit von der Reifenaufstandsfläche des Reifens auf der Fahrbahn, die im allgemeinen auch als "Latsch" oder "Footprint" bezeichnet wird, ausgegangen. In jedem Laufflächenausschnitt gleichen Umrisses ist vorgenannte Mindestanzahl von Spikes enthalten, um in jeder Situation einen gewissen Griff auf der Fahrbahn zu ermöglichen. Die anderen Limitierungen hingegen betreffen das akustische Qualitätsniveau.

Die Erfinder haben erkannt, dass für die Erreichung einer hohen akustischen Qualität zwar eine große Schwankung des Spikeabstandes in jeder Spikespur erforderlich ist, so wie dies im Prinzip auch von der Positiv-Verpitchung her bekannt ist, dass dazu aber nicht auch eine große Schwankung des Spikeintegrales über jedem Laufflächenausschnitt erforderlich ist, im Gegenteil für die akustische Qualität oberhalb der Schwankungsgrenze von 2 sogar Nachteile bringt. Die Erfinder haben nämlich weiter erkannt, dass sehr große Schwankungen auch im Spikeintegral nur noch die sehr tiefen Frequenzen besser bekämpfen lassen unter Hinnnahme schlechterer Pegel im mittleren Frequenzbereich, der für unser Empfinden besonders wichtig ist.

Erfindungsgemäß ist also die Mindestanzahl von Spikepositionen innerhalb eines Latschumrisses in jeder Phasenstellung des Latschumrisses auf verschiedene Spikereihen verteilt. Hierbei beeinflusst das Geräuschniveau insbesondere die Spikeverteilung innerhalb einer Spikereihe, wohingegen Wechselwirkungen zwischen den Spikereihen weniger relevant sind.

Die an sich schon neuartige Limitierung des Spikeintegrales, besonders die ungewöhnliche Enge dieser Limitierung, hat neben der akustischen Auswirkung zudem den Vorteil, eine besonders hohe Fahrsicherheit zu bieten. Letztere wird nämlich von dem Laufflächenausschnitt mit der schlechtesten Griffigkeit - also der kleinsten Spikeanzahl - determiniert. So wie eine Kette nur so stark wie ihr schwächstes Glied ist - weshalb eine ökonomische Kette aus möglichst gleichstarken Gliedern besteht - ist die erreichte Sicherheit auch nur so hoch wie die des unsichersten, also am wenigsten griffigen, Laufflächenabschnittes.

Zusammengefasst vermeidet die Erfindung durch die Begrenzung der Differenz zwischen größter und geringster Spikesanzahl genauso abrupte Änderungen beim Abrollen des Reifens, die zu zusätzlicher Schallabstrahlung führen können, wie Umfangsabschnitte des Reifens mit gegenüber der Fahrbahn stark unterschiedlicher Griffigkeit.

Vorzugsweise wird zunächst genau die nötige Mindestanzahl von Spikes in jedem Flächenabschnitt vorgesehen, die eine Mindestgriffigkeit gewährt, vorzugsweise 5 oder 6. Bei der erfindungsgemäßen Lehre zur Verteilung der Spikepositionen kann beim ersten Durchgang über den gesamten Reifenumfang der Fall auftreten, dass die Zahl der belegten Spikepositionen noch unterhalb der angestrebten Gesamtanzahl von Spikes liegt. Dann sollen in einem zweiten Durchgang weitere Spikepositionen auf der Lauffläche so verteilt werden, dass innerhalb einer jeden Spikespur eine hohe Ungleichmäßigkeit der Beabstandung erhalten bleibt. Aber auch dabei darf erfindungsgemäß die Schwankung des Spikeintegrales nicht 2 übersteigen.

Zwar sind Wechselwirkungen zwischen den Spikes verschiedener Spikereihen zunächst nicht relevant, eine störende Geräuschbildung kann jedoch auftreten, wenn zwei oder mehr Spikes gleichzeitig bzw. mit relativ kleinem zeitlichen Abstand zueinander aufschlagen, da hierbei eine kurzzeitig erhöhte Schallintensität wahrgenommen werden kann. Da in jedem Flächenabschnitt jeder Spikereihe lediglich ein Spike existiert, könnten somit lediglich Spikes unterschiedlicher Reihen mit einem kleinen zeitlichen Abstand zueinander aufschlagen. Dies kann vorteilhafterweise verhindert werden, indem die Spikes verschiedener Spikereihen einen vorgegebenen Mindestabstand in Umfangsrichtung zueinander aufweisen.

Die Fahrzeugreifen weisen vorteilhafterweise einen mittleren Bereich ohne Spikes auf, wie es für sich genommen bereits aus der oben genannten DT 24 50 629 A1 bekannt ist. Erfindungsgemäß kann dieser Bereich insbesondere ein Drittel oder mehr der Axialerstreckung des Flächenabschnittes einnehmen. Diese Spikereihen werden durch den spikefreien mittleren Bereich in Spikereihen eines linken Seitenabschnittes und eines rechten Seitenabschnittes unterteilt. Bei Verwendung von z. B. acht Spikereihen sind somit jeweils vier Spikereihen in jedem Seitenabschnitt vorgesehen, die z. B. jeweils als zwei Paare von dichter beieinander angeordneten Spikereihen vorgesehen werden können. Hierbei können die beiden äußeren Spikereihen bei Verwendung eines Klötze aufweisenden Profiles, wie es bei Winterreifen üblich ist, auf den axial äußeren Schulterklötzen und die inneren beiden Spikereihen auf der zu der Schulterklotzspur axial innen angrenzenden weiteren Klotzspur vorgesehen sein. Der axial mittlere spikefreie Bereich kann eine mittlere Klotzspur und einen axial inneren Randbereich der angrenzenden Klotzspuren umfassen.

Um ein Loslösen der Spikes bzw. seitliches Ausbrechen aus den Klötzen zu verhindern, kann ein Minimalabstand zwischen den einzelnen Spikepositionen und Klotzkanten sowie ein Minimalabstand zu einer Schulter vorgesehen sein.

Eine Wechselwirkung zwischen den Spikereihen kann eine Axialbeabstandung von mindestens 10 mm verhindern.

Die Bespikung des Reifens wird erleichtert, wenn ein Abstand zwischen den Spikes in Umfangsrichtung größer als ein Abstand in axialer Richtung ist.

Die Berechnung sinnvoller Spikepositionen beginnt zweckmäßigerweise mit der Definition einer Grundmenge von möglichen Spikepositionen anhand der Abstandskriterien zu den Kanten des jeweiligen Positives, in dem die Verankerung eines Spikes erörtert wird. Dies gewährleistet von Anfang an die unverzichtbare Ausbrechsicherheit. Dem gleichen Ziele dienen auch die in den Unteransprüchen 7 bis 9 genannten weiteren Kriterien, die eine Kraftkonzentration auf zu kleine Flächen ausschließt.

Im nächsten Schritt sollte dann eine erste Spikeposition in einer der Spikereihen gewählt werden. Der der Reifenaufstandsfläche entsprechende Flächenbereich wird in Umfangsrichtung mit seinem Rand an die erste Spikeposition gelegt, so dass in der somit festgelegten ersten Flächenabschnittsposition nachfolgend die vorgegebene Mindestanzahl von Spikepositionen ausgewählt werden kann. Hierbei wird die auf dem Rand des Flächenabschnitts liegende erste Spikeposition nicht als in im Flächenabschnitt liegend gewertet.

Nachdem die Mindestanzahl von Spikepositionen in verschiedenen Spikereihen - gegebenenfalls unter Heranziehung weiterer Kriterien - ausgewählt wurde, kann der Flächenabschnitt in Umfangsrichtung so weitergeschoben werden, dass die nächstfolgende Spikeposition wiederum auf dem Rand des Flächenabschnitts liegt, so dass ein zweiter Flächenabschnitt festgelegt wird, in dem lediglich eine Spikeposition fehlt, um die Mindestanzahl von Spikepositionen zu erreichen. Diese Spikeposition kann in einer der noch nicht belegten Spikereihen - gegebenenfalls unter Heranziehung weiterer Kriterien - ausgewählt werden, woraufhin der Flächenabschnitt wieder in Umfangsrichtung verschoben werden kann.

Durch sukzessive Auswahl der Flächenabschnittspositionen kann somit nach Vollendung einer Umdrehung des Reifens die gewünschte Verteilung der Spikeposition auf der Lauffläche erreicht werden. Falls hierbei noch nicht die gewünschte Anzahl von Spikes auf der Lauffläche verteilt worden ist, kann die Restanzahl noch nicht vergebener Spikepositionen ergänzend auf der Lauffläche verteilt werden. Dies kann unter Heranziehung weiterer Kriterien erfolgen, die auf eine große Ungleichmäßigkeit innerhalb einer jeden Spikespur aber eine nur geringe, vorzugsweise kleinstmögliche, Ungleichmäßigkeit - also 1 - innerhalb eines jeden Spikeintegrales, also der Aufsummierung aller Spikes innerhalb aller Laufflächenausschnitte mit Latschumriss, zielen.

Falls bei der sukzessiven Festlegung der Spikepositionen in einer Flächenabschnittsposition keine ausreichende Anzahl von Spikepositionen zur Verfügung steht, da bereits die gewünschte Gesamtanzahl von Spikepositionen auf den verschiedenen Flächenabschnittspositionen verteilt wurde, erfolgt ein Abbruch, und es wird wieder eine erste Spikeposition festgelegt.

Die einzelne Verteilung der Spikepositionen zwischen der Grundmenge verfügbarer Spikepositionen soll in der ersten Flächenabschnittsposition sowie den weiteren Flächenabschnittspositionen jeweils ungleichmäßig erfolgen, so dass eine Periodizität oder Systematik, die zu Schwingungen und Resonanzen führen kann, vermieden wird.

Die Erfindung wird im Folgenden anhand beiliegender Figur an einigen Ausführungsformen näher erläutert:

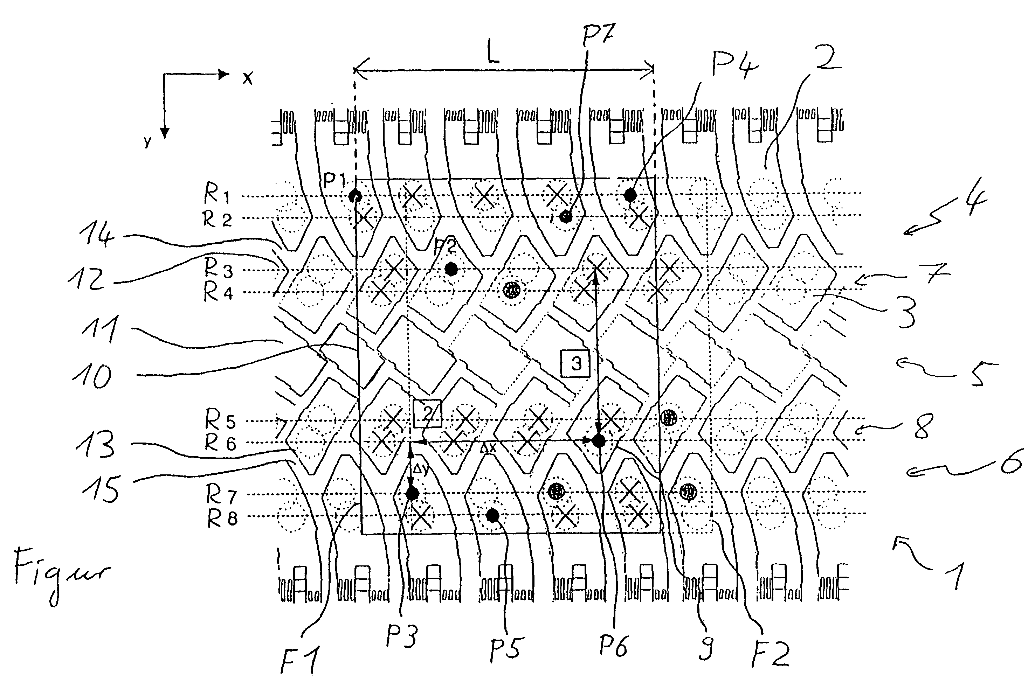

Die Figur zeigt eine Abwicklung einer zylindrischen Projektion der Lauffläche eines erfindungsgemäßen Fahrzeugreifens.

Eine Lauffläche 1 weist ein Profil mit einzeln stehenden Klötzen 3 und Schulterklötzen 2 als erhabene Bereiche auf. Das gezeigte Profil hat fünf Klotzspuren, nämlich eine mittlere 11, eine links davon angeordnete 12 und eine rechts davon angeordnete 13, sowie an den Rändern je eine Reihe von Schulterklötzen 2.

Zwischen den Schulterklötzen 2 und den axial äußeren Klotzspuren 12, 13, sind zickzackförmig verlaufende Umfangsrillen 14, 15 ausgebildet. In Axialrichtung Y verlaufen zickzackförmige Querrillen.

Erfindungsgemäß werden Spikes in Spikepositionen auf parallel zueinander und in axialer Richtung Y zueinander versetzten Spikereihen R1 bis R8 eingesetzt. Hierbei ist ein mittlerer Bereich 5, der z. B. in axialer Richtung ein Drittel der Lauffläche einnehmen kann, frei von Spikes, wohingegen in axial äußeren Bereichen 4, 6, jeweils Spikereihen R1 bis R4 und R5 bis R8 vorgesehen sind. Die vier Spikereihen des äußeren Bereiches sind jeweils in Paare von Spikereihen R1, R2; R3, R4; R5, R6; R7, R8 gruppiert. Die Spikepositionen der axial äußeren Spikereihen R1, R2 und R7, R8 sind in den Schulterklötzen 2, die Spikepositionen der axial inneren Spikereihen R3, R4 und R5, R6 sind in Einzelklötzen 3 der Einzelklotzspuren 7, 8 vorgesehen.

Ein einer Reifenaufstandsfläche auf der Fahrbahn entsprechender Flächenabschnitt ist in einem ersten Flächenabschnitt F1 sowie einem gestrichelt gezeichneten zweiten Flächenabschnitt F2 gezeigt. Die Flächenabschnitte weisen jeweils eine axiale Erstreckung über die relevante Lauffläche und eine Umfangserstreckung L auf. Erfindungsgemäß sind in jedem Flächenabschnitt mindestens die vorgegebene Mindestanzahl von Spikepositionen, z. B. sechs, vorgesehen. Hierbei sind in dem Flächenabschnitt in jeder Flächenabschnittsposition die Spikes in unterschiedlichen Spikereihen angeordnet. Die Auswahl der Spikepositionen kann wie folgt erfolgen:

Zunächst wird eine Grundmenge von möglichen Spikepositionen ermittelt, wobei die Spikereihen R1 bis R8 mit einem hinreichenden axialen Abstand zu der Schulter von vorzugsweise 10 mm und mit einem hinreichenden minimalen Abstand zueinander von vorzugsweise 13 mm angeordnet werden. In den Spikereihen werden mögliche Spikepositionen unter Beachtung der Limitierung auf einen hinreichenden Abstand zu den Klotzkanten ermittelt. Insoweit die verbleibende Flächenauswahl danach noch groß genug verbleibt, können weitere Bedingungen, z. B. ein festgelegter absoluter Abstand zu der voreilenden oder nacheilenden Klotzkante oder eine relative Position innerhalb eines jeden Klotzes - so dass der absolute Abstand zur voreilenden oder nacheilenden Klotzkante bei der Verpitchung entsprechend mitgestreckt wird - festgelegt werden.

Diese Grundmenge möglicher Spikepositionen ist somit von dem jeweiligen Profil und der jeweiligen Verpitchung abhängig. In der Figur werden mögliche Spikepositionen durch auf den Spikereihen R1 bis R8 liegende gestrichelte Kreise gezeigt. Erfindungsgemäß wird aus dieser Grundmenge möglicher Spikepositionen eine konkrete Auswahl getroffen. Hierbei werden zum einen eine hohe und möglichst gleichmäßige Griffigkeit auf Eis, andererseits aber auch eine angenehme Frequenzverteilung der hinzunehmenden Schailleistung angestrebt.

In einem ersten Schritt wird eine erste Spikeposition, in der Figur als "P1" bezeichnet, ausgewählt. Hierbei kann eine Spikeposition aus einer äußeren Reihe R1, R8 oder auch eine Spikeposition aus einer anderen Reihe ausgewählt werden. An die ausgewählte erste Spikeposition P1 wird nunmehr der erste Flächenabschnitt F1 derartig angelegt, dass die erste Spikeposition P1 am Rand des ersten Flächenabschnittes liegt. Gedanklich wird die erste Spikeposition P1 hierbei dem ersten Flächenabschnitt F1 nicht zugerechnet, so dass nachfolgend die vorgegebene Mindestanzahl von Spikepositionen, die einen hinreichenden Griff auf einer Eisfläche gewährleisten - vorzugsweise sechs - ausgesucht werden.

Für einen guten Griff auf dem Eis und eine geringe Geräuschbildung werden hierbei Spikepositionen in verschiedenen Spikereihen ausgewählt. Die Auswahl soll ungleichmäßig erfolgen, wobei z. B. in der Figur als nächstes die Spikeposition P2 ausgewählt wird.

Nach Festlegung der zweiten Spikeposition werden diejenigen Spikepositionen aus der Grundmenge möglicher Spikepositionen entfernt, die nicht mehr zur Verfügung stehen zwecks Erfüllung der Bedingungen nach einem Minimalabstande ***Δ***Y in axialer Richtung und ΔX in Umfangsrichtung sowie der Bedingung zur Verhinderung eines gleichzeitigen Auftreffens zweier Spikes, gemäß der zwei Spikepositionen einen hinreichenden Minimalabstand in Umfangsrichtung aufweisen müssen. Dementsprechend enfallen die möglichen Spikepositionen in den Reihen R5 und R6, die auf in etwa gleicher Umfangsposition X wie die zweite Spikeposition P2 stehen.

Gemäß diesen Randbedingungen werden nachfolgend ungleichmäßig innerhalb der Spikespuren weitere Spikeposition P3 bis P7 ausgewählt, wobei nach Auswahl einer Spikeposition die aufgrund der Randbedingungen jeweils verbotenen weiteren Spikepositionen gestrichen werden. In der Figur sind diese nicht mehr zulässigen Spikepositionen mit einem Kreuz durchgestrichen. Nach dem Setzen der Spikepositionen P2 bis P7 sind nunmehr noch die in den Reihen R4 und R5 gezeigten Spikepositionen unbesetzt.

Bei Anlage des Flächenabschnittes F2, in dem die Spikeposition P3 auf dem linken Rande 10 des Flächenabschnittes liegt, können somit diese freien Plätze in R4 oder R5 als weitere Spikepositionen gesetzt werden, oder es kann nunmehr eine der beiden freien gezeigten Spikepositionen in Reihe R7 belegt werden, da die Spikeposition P3 in R7 nicht mehr in dem Flächenabschnitt liegt. Diese Auswahl erfolgt wiederum ungleichmäßig.

Dieser Vorgang wird weitergeführt, bis eine volle Umdrehung des Reifens erreicht ist, also die gesamte Lauffläche von Flächenabschnitten in verschiedenen Flächenabschnittspositionen abgedeckt ist. Sollte die so erreichte Spikeverteilung noch nicht zu der gewünschten Gesamtanzahl von Spikes, zum Beispiel normentsprechend 110 Spikes bei 14" oder 15" Rädern, 90 Spikes für Räder mit einem Durchmesser kleiner/gleich 13" und 130 Spikes für Räder mit einem Durchmesser größer/gleich 16", führen, werden die noch verfügbaren Spikepositionen aus den noch nicht als unzulässig gestrichenen - d. h. in der Figur durch einen großen Kreis dargestellten freien Spikepositionen besetzt. Somit wird in einigen Flächenabschnitten eine Anzahl von Spikepositionen erreicht, die größer ist als die erforderliche Mindestanzahl von Spikepositionen. Die zusätzlichen Spikepositionen können auch etwa gleichmäßig über die Lauffläche verteilt werden.

In dem Fall, dass bei der oben beschriebenen sukzessiven Vorgehensweise die Gesamtanzahl von Spikepositionen vergeben ist, bevor die gesamte Lauffläche des Reifens von Flächenabschnitten in verschiedenen Flächenabschnittspositionen abgedeckt ist, wird dieses Verfahren abgebrochen und erneut mit dem oben beschriebenen ersten Schritt begonnen.

Nachdem die Spikepositionen auf oben beschriebene Weise ermittelt worden sind, werden Spikes in diesen Spikepositionen angebracht.

## Patentansprüche

1. Fahrzeugreifen mit einer Lauffläche (1), die (1) dazu bestimmt ist, mit einem Fahrweg in Kontakt zu treten, sich dabei abzuplatten und so einen Latsch auszubilden,
- wobei der Latsch einen Latschumriss (F1, F2) hat, der sich in Abhängigkeit von dem Luftüberdruck im Inneren des Reifens und der Radlast einstellt, wobei als "Normumriss" derjenige Latschumriss bezeichnet wird, der sich unter 80 % der höchstzugelassenen Radlast und unter dem für den Reifen empfohlenen Luftdruck einstellt, wobei im Falle des Fehlens einer Luftdruckangabe für einen PKW-Reifen als Luftüberdruck 2,2 bar, für einen Leicht-LKW-Reifen 3,5 bar und einen LKW-Reifen 8,5 bar einzusetzen sind,
- wobei sich in erhabenen Bereichen der Lauffläche Spikes (S) befinden, die in mehreren, in Umfangsrichtung (X) des Reifens verlaufenden Spikereihen (R₁ bis R₈) angeodnet sind,
- wobei die Spikes (S) innerhalb einer jeden der verschiedenen Spikereihen (R₁ bis R₈) über die Lauffläche (1) ungleichmäßig verteilt sind,
- wobei in jedem Laufflächen-Ausschnitt (F1, F2) mit einem Umriss entsprechend dem Normumriss, eine Anzahl A von Spikes (S) positioniert ist, die größer oder gleich Aₘᵢₙ und kleiner oder gleich Aₘₐₓ ist,
**dadurch gekennzeichnet, dass**
- die Spikesanzahl Aₘₐₓ in dem Laufflächen-Ausschnitt mit der größten Spikedichte um höchstenes 2 größer ist als die Spikesanzahl Aₘᵢₙ in dem Laufflächen-Ausschnitt mit der geringsten Spikedichte, und dass
- innerhalb eines jeden solchen Laufflächen-Ausschnittes (F1, F2) in jeder Spikereihe (Rᵢ) maximal ein Spike (S) positioniert ist.

2. Fahrzeugreifen nach Anspruch 1, **dadurch gekennzeichnet, dass** die Spikesanzahl Aₘₐₓ in dem Laufflächen-Ausschnitt mit der größten Spikedichte kleiner oder gleich 9 ist und die Spikesanzahl Aₘᵢₙ in dem Laufflächen-Ausschnitt mit der geringsten Spikedichte größer oder gleich 5 ist.

3. Fahrzeugreifen nach Anspruch 1, **dadurch gekennzeichnet, dass** die Spikesanzahl Aₘₐₓ in dem Laufflächen-Ausschnitt mit der größten Spikedichte kleiner oder gleich 8 ist und die Spikesanzahl Aₘᵢₙ in dem Laufflächen-Ausschnitt mit der geringsten Spikedichte größer oder gleich 6 ist.

4. Fahrzeugreifen nach Anspruch 1, **dadurch gekennzeichnet, dass** die Spikesanzahl Aₘₐₓ in dem Laufflächen-Ausschnitt mit der größten Spikedichte nur um 1 größer ist als die Spikesanzahl Aₘᵢₙ in dem Laufflächen-Ausschnitt mit der geringsten Spikedichte.

5. Fahrzeugreifen nach einem der Ansprüche 1 bis 4, **dadurch gekennzeichnet, dass** die Lauffläche (1) fünf bis zwölf Spikereihen (R1 bis R8) aufweist.

6. Fahrzeugreifen nach einem der Ansprüche 1 bis 5, **dadurch gekennzeichnet, dass** in Schulterklötzen (2) axial äußerer Seitenbereiche (4, 6) der Lauffläche (1) jeweils zwei Spikereihe (R1, R2; R7, R8) angeordnet sind.

7. Fahrzeugreifen nach Anspruch 1, **dadurch gekennzeichnet, dass** - zumindest in den axial äußeren Seitenbereichen (4, 6) der Lauffläche (1) - für alle Paare aus je zwei benachbarten Spikes (P3, P6) gilt, dass die Komponente (ΔX) des Abstandes in Umfangsrichtung zwischen beiden Spikes (P3, P6) größer ist als die Komponente (ΔY) des Abstandes in axialer Richtung.

8. Fahrzeugreifen nach Anspruch 7, **dadurch gekennzeichnet, dass** - zumindest in den axial äußeren Seitenbereichen (4, 6) der Lauffläche (1) - für alle Paare aus je zwei benachbarten Spikes (P3, P6) gilt, dass die Komponente (ΔX) des Abstandes in Umfangsrichtung zwischen beiden Spikes (P3, P6) mindestens 13 mm beträgt.

9. Fahrzeugreifen nach einem der Ansprüche 1 bis 8, **dadurch gekennzeichnet, dass** in axialer Richtung ein Abstand von mindestens 10 mm zwischen allen Paaren aus je zwei benachbarten Spikereihen (R1 - R8), besteht.

10. Fahrzeugreifen nach einem der Ansprüche 1 bis 9, **dadurch gekennzeichnet, dass** zwischen jedem Spike (P1 - P7) und den benachbarten Begrenzungskanten (9) des erhabenen Bereiches, in dem sich dieser Spike befindet, ein Abstand von mindestens 7 mm besteht.

## Claims

1. Vehicle tyre having a tread (1) which is intended (1) to be placed in contact with an underlying surface and flattened out in the process and thus form a contact area,
- wherein the contact area has a contact area outline (F1, F2) which depends on the excess air pressure in the interior of the tyre and the wheel load, wherein a "standard outline" refers to that contact area outline which occurs at less than 80% of the maximum approved wheel load and at the air pressure which is recommended for the tyre, wherein, if an air pressure indication is absent, 2.2 bar is to be set as the excess air pressure for a passenger car tyre, 3.5 bar for a van and 8.5 bar for a lorry,
- wherein spikes (S) which are arranged in a plurality of rows (R₁ to R₈) of spikes which extend in the circumferential direction (X) of the tyre are located in raised areas of the tread,
- the spikes (S) being distributed in a nonuniform way over the tread (1) within each of the various rows (R₁ to R₈) of spikes,
- a number A of spikes (S) which is greater than or equal to Aₘᵢₙ and less than or equal to Aₘₐₓ being positioned in each part (F1, F2) of the tread with an outline corresponding to the standard outline,
**characterized in that**
- the number Aₘₐₓ of spikes in the part of the tread with the greatest density of spikes is at most 2 greater than the number Aₘᵢₙ of spikes in the part of the tread with the smallest density of spikes, and **in that**
- a maximum of one spike (S) is positioned in each row (Rᵢ) of spikes within each part (F1, F2) of the tread of this kind.

2. Vehicle tyre according to Claim 1, **characterized in that** the number Aₘₐₓ of spikes in the part of the tread with the greatest density of spikes is less than or equal to 9, and the number Aₘᵢₙ of spikes in the part of the tread with the smallest density of spikes is greater than or equal to 5.

3. Vehicle tyre according to Claim 1, **characterized in that** the number Aₘₐₓ of spikes in the part of the tread with the greatest density of spikes is less than or equal to 8, and the number Aₘᵢₙ of spikes in the part of the tread with the smallest density of spikes is greater than or equal to 6.

4. Vehicle tyre according to Claim 1, **characterized in that** the number Aₘₐₓ of spikes in the part of the tread with the greatest density of spikes is only 1 greater than the number Aₘᵢₙ of spikes in the part of the tread with the smallest density of spikes.

5. Vehicle tyre according to one of Claims 1 to 4, **characterized in that** the tread (1) has five to twelve rows (R1 to R8) of spikes.

6. Vehicle tyre according to one of Claims 1 to 5, **characterized in that** two rows (R1, R2; R7, R8) of spikes are arranged in each of the shoulder blocks (2) on axially outer side regions (4, 6) of the tread (1).

7. Vehicle tyre according to Claim 1, **characterized in that**, at least in the axially outer side regions (4, 6) of the tread (1), the component (_{Δ}X) of the distance in the circumferential direction between two spikes (P3, P6) is greater than the component (_{Δ}Y) of the distance in the axial direction for all the pairs composed of two adjacent spikes (P3, P6) in each case.

8. Vehicle tyre according to Claim 7, **characterized in that**, at least in the axially outer side regions (4, 6) of the tread (1), the component (_{Δ}X) of the distance in the circumferential direction between two spikes (P3, P6) is at least 13 mm for all the pairs composed of two spikes (P3, P6) adjacent in each case.

9. Vehicle tyre according to one of Claims 1 to 8, **characterized in that** in the axial direction there is a distance of at least 10 mm between all the pairs composed of two rows (R1 - R8) of spikes adjacent in each case.

10. Vehicle tyre according to one of Claims 1 to 9, **characterized in that** there is a distance of at least 7 mm between each spike (P1 - P7) and the adjacent boundary edges (9) of the raised area in which this spike is located.

## Revendications

1. Bandage pneumatique pour véhicule muni d'une bande de roulement (1) qui est prévue pour venir en contact avec une chaussée, s'y aplatir et former ainsi un aplatissement,
- l'aplatissement ayant un périmètre d'aplatissement (F1, F2) qui s'ajuste en fonction de la surpression d'air à l'intérieur du pneumatique et en fonction de la charge des roues, le périmètre "standard" étant désigné comme étant le périmètre d'aplatissement qui s'ajuste à 80% de la charge des roues admissible maximale et à la pression d'air recommandée pour le pneumatique, dans le cas de l'absence d'une indication de pression d'air pour un pneumatique de véhicule de tourisme, la surpression d'air devant être ajustée à 2,2 bars, pour un camion léger à 3,5 bars et pour un poids lourd à 8,5 bars,
- des crampons (S) se trouvant dans les régions rehaussées de la bande de roulement, lesquels sont disposés suivant plusieurs rangées de crampons (R₁ à R₈) s'étendant dans la direction périphérique (X) du pneu,
- les crampons (S) à l'intérieur de chacune des rangées de crampons différentes (R₁ à R₈) étant répartis irrégulièrement sur la bande de roulement (1),
- dans chaque portion (F1, F2) de la bande de roulement ayant un périmètre correspondant au périmètre standard, un nombre A de crampons (S) étant prévu, qui est supérieur ou égal à Aₘᵢₙ et inférieur ou égal à Aₘₐₓ,
**caractérisé en ce que**
- le nombre de crampons Aₘₐₓ dans la portion de la bande de roulement ayant la densité maximale de crampons est supérieur d'au plus 2 au nombre de crampons Aₘᵢₙ dans la portion de la bande de roulement ayant la densité de crampons minimale, et **en ce que**
- au maximum un crampon (S) est disposé à l'intérieur de chacune de telles portions de la bande de roulement (F1, F2) dans chaque rangée de crampons (Rᵢ).

2. Bandage pneumatique pour véhicule selon la revendication 1, **caractérisé en ce que** le nombre de crampons Aₘₐₓ dans la portion de la bande de roulement ayant la densité de crampons maximale est inférieur ou égal à 9 et le nombre de crampons Aₘᵢₙ dans la portion de la bande de roulement ayant la densité de crampons minimale est supérieur ou égal à 5.

3. Bandage pneumatique pour véhicule selon la revendication 1, **caractérisé en ce que** le nombre de crampons Aₘₐₓ dans la portion de la bande de roulement ayant la densité de crampons maximale est inférieur ou égal à 8 et le nombre de crampons Aₘᵢₙ dans la portion de la bande de roulement ayant la densité de crampons minimale est supérieur ou égal à 6.

4. Bandage pneumatique pour véhicule selon la revendication 1, **caractérisé en ce que** le nombre de crampons Aₘₐₓ dans la portion de la bande de roulement ayant la densité de crampons maximale est seulement supérieur de 1 unité au nombre de crampons Aₘᵢₙ dans la portion de la bande de roulement ayant la densité de crampons minimale.

5. Bandage pneumatique pour véhicule selon l'une quelconque des revendications 1 à 4, **caractérisé en ce que** la bande de roulement (1) présente cinq à douze rangées de crampons (R1 à R8).

6. Bandage pneumatique pour véhicule selon l'une quelconque des revendications 1 à 5, **caractérisé en ce que** dans des petits blocs d'épaulement (2) de régions latérales axialement extérieures (4, 6) de la bande de roulement (1) sont à chaque fois disposées deux rangées de crampons (R1, R2 ; R7, R8).

7. Bandage pneumatique pour véhicule selon la revendication 1, **caractérisé en ce que** - au moins dans les régions latérales axialement extérieures (4, 6) de la bande de roulement (1) - pour toutes les paires de deux crampons voisins respectifs (P3, P6), la composante (ΔX) de la distance dans la direction périphérique entre deux crampons (P3, P6) est supérieure à la composante (ΔY) de la distance dans la direction axiale.

8. Bandage pneumatique pour véhicule selon la revendication 7, **caractérisé en ce que** - au moins dans les régions latérales axialement extérieures (4, 6) de la bande de roulement (1) - pour toutes les paires de deux crampons voisins respectifs (P3, P6), la composante (ΔX) de la distance dans la direction périphérique entre deux crampons (P3, P6) vaut au moins 13 mm.

9. Bandage pneumatique pour véhicule selon l'une quelconque des revendications 1 à 8, **caractérisé en ce que** dans la direction axiale, il existe une distance d'au moins 10 mm entre toutes les paires de deux rangées de crampons voisines respectives (R1 - R8).

10. Bandage pneumatique pour véhicule selon l'une quelconque des revendications 1 à 9, **caractérisé en ce qu'**entre chaque crampon (P1 - P7) et le bord limite voisin (9) de la région rehaussée dans laquelle se trouve ce crampon, il existe une distance d'au moins 7 mm.
